# EUROPÄISCHE PATENTSCHRIFT

(11) **EP 2 417 491 B1**
(45) Veröffentlichungstag und Bekanntmachung des Hinweises auf die Patenterteilung: **27.08.2014**
(21) Anmeldenummer: 10712422.4
(22) Anmeldetag: 31.03.2010
(51) Int. Cl.: G02F 1/137, G02F 1/17, G02F 1/139, G06K 19/067, B42D 15/00

(54) **PIEZOCHROMES SICHERHEITSELEMENT AUF FLÜSSIGKRISTALLBASIS**
LIQUID CRYSTAL BASED PIEZOCHROMIC SECURITYELEMENT
ÉLÉMENT DE SÉCURITÉ À BASE DE CRISTAL LIQUIDE

(30) Priorität: 06.04.2009 DE 102009016533
(43) Veröffentlichungstag der Anmeldung: 15.02.2012
(73) Patentinhaber: Giesecke & Devrient GmbH, 81677 München (DE)
(72) Erfinder: BORNSCHLEGL, Alexander, 81735 München (DE); MENGEL, Christoph, 83607 Holzkirchen (DE); HOFFMÜLLER, Winfried, 83646 Bad Tölz (DE)
(86) Internationale Anmeldenummer: PCT/EP2010/054308
(87) Internationale Veröffentlichungsnummer: WO 2010/115803

(56) Entgegenhaltungen:
- EP-A1- 2 003 623
- EP-A2- 0 435 029
- WO-A1-2005/120855
- DE-A1-102006 051 524
- FR-A1- 2 698 390
- JP-A- 2003 315 760
- US-A1- 2006 126 001
- SCHMIDTKE J ET AL: "Probing the photonic properties of a cholesteric elastomer under biaxial stress", 22. Februar 2005 (2005-02-22), MACROMOLECULES 20050222 AMERICAN CHEMICAL SOCIETY US LNKD- DOI:10.1021/MA0487655, VOL. 38, NR. 4, PAGE(S) 1357 - 1363, XP002583258, das ganze Dokument

## Beschreibung

Die Erfindung betrifft ein piezochromes Sicherheitselement für Datenträger, einen Datenträger, ein Transferelement mit einem solchen Sicherheitselement und ein Verfahren zur Herstellung eines solchen Sicherheitselementes. Sicherheitselemente werden häufig mit zahlreichen Sicherheitsmerkmalen ausgestattet, die ein Fälschen verhindern. Solche Sicherheitsmerkmale können durch einen Betrachter erkennbare, beispielsweise visuell erkennbare Merkmale, sogenannte Humanmerkmale, oder maschinenlesbare Merkmale sein, oder Merkmale, die beides in sich vereinen.

Datenträger, wie Wert- oder Ausweisdokumente, oder auch andere Wertgegenstände, wie etwa Markenartikel oder Verpackungen von hochwertigen Produkten, werden zur Absicherung mit Sicherheitselementen versehen, die eine Überprüfung der Echtheit des Gegenstandes gestatten und die zugleich als Schutz vor unerlaubter Reproduktion dienen. Weiterhin erzeugen Sicherheitselemente häufig einen gut sichtbaren optischen Eindruck, weswegen solche Sicherheitselemente neben ihrer Funktion als Sicherungsmittel bisweilen auch als dekorative Elemente für solche Datenträger oder Verpackungen verwendet werden. Ein Sicherheitselement kann in solche Datenträger, beispielsweise in eine Banknote oder eine Chipkarte, eingebettet sein oder als selbsttragendes oder nicht-selbsttragendes Transferelement ausgebildet sein, beispielsweise als nicht-selbsttragendes Patch oder als selbsttragendes Etikett, das nach seiner Herstellung auf einen zu sichernden Datenträger oder sonstigen Gegenstand, beispielsweise über einem Fensterbereich des Datenträgers, aufgebracht wird.

Datenträger im Sinne der vorliegenden Erfindung sind insbesondere Banknoten, Aktien, Anleihen, Urkunden, Gutscheine, Schecks, hochwertige Eintrittskarten, aber auch andere fälschungsgefährdete Papiere, wie Pässe oder sonstige Ausweisdokumente, und auch kartenförmige Datenträger, insbesondere Chipkarten, sowie Produktsicherungselemente, wie Etiketten, Siegel, Verpackungen und dergleichen. Der Begriff "Datenträger" umfasst auch nicht umlauffähige Vorstufen solcher Datenträger, die beispielsweise im Fall von Sicherheitspapier in quasi endloser Form vorliegen und zu einem späteren Zeitpunkt weiterverarbeitet werden, etwa zu Banknoten, Schecks, Aktien und dergleichen.

Um eine Fälschung oder Nachbildung von solchen Sicherheitselementen mit beispielsweise hochwertigen Farbphotokopiergeräten zu verhindern, können Sicherheitselemente Sicherheitsmerkmale aufweisen, die durch ein Farbphotokopiergerät weder erzeugt noch erkannt werden können. Hierzu ist beispielsweise die Verwendung optisch variabler Elemente bekannt, die dem Betrachter unter verschiedenen Betrachtungswinkeln verschiedene optische Eindrücke, insbesondere Farbeindrücke, vermitteln. Zur Erzeugung von Funktions- oder Effektschichten, die solche optisch variablen Effekte zeigen, sind verschiedene Techniken bekannt. Beispielsweise können optische Interferenzschichten vollflächig oder in Pigmentform vorliegen. Solche Interferenzschichten weisen typischerweise einen Dünnschichtaufbau auf und umfassen eine Reflexionsschicht, eine Absorberschicht und eine oder mehrere dazwischen liegende dielektrische Abstandsschichten und basieren beispielsweise auf Glimmer, auf SiO₂ oder auf Al₂O₂. Anstelle von Interferenzschichten oder Interferenzschichtpigmenten können auch cholesterische Flüssigkristalle verwendet werden, welche beispielsweise als flüssigkristalline Silikonpolymere vorliegen.

Die verschiedenen optischen Eindrücke für einen Betrachter können einen so genannten Farbkippeffekt vermitteln, bei dem für den Betrachter unter verschiedenen Betrachtungswinkeln verschiedene Farbtöne erkennbar sind. Verschiedene optische Eindrücke können auch dadurch entstehen, dass unter einem bestimmten Betrachtungswinkel die Effektschicht vollständig transparent und somit für einen Betrachter unsichtbar ist, während sie unter einem anderen Betrachtungswinkel (Effektwinkel) einen Farbton zeigt.

Interferenzschichten, Druckfarben mit Interferenzschichtpigmenten oder Druckfarben mit flüssigkristallinen Pigmenten sind häufig unter allen Betrachtungswinkeln stark transluzent, so dass der bei Betrachtung der Effektschicht unter dem Effektwinkel für den Betrachter erkennbare Farbeindruck relativ schwach ist. Solche Effektschichten mit starker Lichtdurchlässigkeit werden zur Verbesserung der Erkennbarkeit des Farbwechsels daher vorzugsweise über dunklen oder schwarzen Hintergründen aufgetragen.

Weiterhin ist aus den Druckschriften EP 1972463 und WO 2008/017869 die Verwendung photonischer Kristalle in Sicherheitselementen bekannt. Photonische Kristalle zeichnen sich durch eine periodische Variation des Brechungsindex aus, wodurch eine so genannte optische Bandlücke entsteht, in der keine Lichtausbreitung innerhalb des photonischen Kristalls möglich ist. Diese Druckschrift offenbart weiterhin die Möglichkeit, die periodische Variation des Brechungsindex durch äußeren mechanischen Druck zu verändern, wodurch ein photonischer Kristall mit piezochromen Eigenschaften entsteht.

Im Allgemeinen bezeichnet der Begriff "Piezochromie" die Eigenschaft eines Materials in Folge einer Änderung der räumlichen Ausdehnung, beispielsweise in Folge eines mechanischen Drucks, den erzeugten Farbeindruck zu verändern, indem beispielsweise der Wellenlängenbereich, in dem Licht reflektiert wird, verändert wird. In der vorliegenden Druckschrift wird der Begriff "Piezochromie" jedoch wesentlich breiter verwendet und es werden alle Materialien, die in Folge von äußerem Druck oder mechanischen Beanspruchungen mit einer Änderung ihrer optischen Eigenschaften reagieren als "piezochrom" bezeichnet.

Die aus den Druckschriften EP 1972463 und WO 2008/017869 bekannten piezochromen, photonischen Kristalle besitzen jedoch eine nur geringe Flexibilität und eine ungünstige Oberflächenstruktur, weswegen solche piezochromen, photonischen Kristalle in Wertpapieren, wie beispielsweise Banknoten, nur bedingt eingesetzt werden können. Zudem ist der Herstellungsprozess solcher Materialien in der Regel mit einem hohen Aufwand verbunden. (s. Photonic Crystals- Advances in Design, Fabrication and Characterization, Wiley-VCH, 2004, 109-131153-173 [0007]

Aus der Druckschrift US 6,104,448 ist eine Schreibtafel mit einer Flüssigkristallschicht bekannt. Die Flüssigkristallschicht enthält einen cholesterischen Flüssigkristall, welcher in einer polymeren Schwammstruktur eingebettet ist. Durch lokalen mechanischen Druck auf eine Oberfläche der flüssigkristallinen Schicht wird in der polymeren Schwammstruktur ein viskoser Fluss erzeugt, wodurch sich der cholesterische Flüssigkristall aus einer fokal-konischen Orientierung in eine planare Orientierung umlagert. Für einen Betrachter unterscheiden sich die optischen Eigenschaften der planaren und der fokal-konischen Orientierung voneinander erkennbar, wodurch eine Schreibtafel realisiert werden kann, auf welcher durch Ausübung eines lokalen mechanischen Drucks geschrieben wird. Weiterhin kann innerhalb der Flüssigkristallschicht der Schreibtafel die vor Ausübung des mechanischen Drucks vorhandene fokal-konische Orientierung des cholesterischen Flüssigkristalls durch ein geeignetes elektrisches Feld wieder hergestellt werden, womit die Schrift auf der Schreibtafel gelöscht wird. Der cholesterische Flüssigkristall verbleibt in beiden Orientierungen auch nach dem Ende der mechanischen oder elektrischen Einwirkung in der momentanen Orientierung.

Mit anderen Worten sind sowohl die fokal-konische als auch die planare Orientierung stabil, weswegen solche Schreibtafeln als bistabil bezeichnet werden.

DE 10 2006 051524 A1 offenbart ein Sicherheitselement für Datenträger umfassend ein in einer Schicht angeordnetes piezochromes, flüssigkristallines Material, wobei auf einer Seite der Schicht eine Information angeordnet ist, die bei Kompression des piezo-chromen, flüssigkristallinen Materials erkennbar ist und in der Ruhelage des piezo-chromen, flüssigkristallinen Materials verschleiert wird, wenn die Information durch die Schicht hindurch betrachtet wird.

In der Zeitschrift Macromolecules 2005, Band 38, Seiten 1357-1363, beschreiben J. Schmidtke et al. im Artikel "Probing the photonic properties of a cholesteric elastomer under biaxial stress" einen freistehenden cholesterischen Elastomerfilm und zeigen, dass sich die Selektivreflexion des Films unter biaxialem mechanischem Stress in der Filmebene zu kürzeren Wellenlängen hin verschiebt.

FR 2 698 390 A1 beschreibt ein piezooptisches Sicherheitsmerkmal, das ein Zeichen aus einem piezochromen cholesterischen Flüssigkristall oder Flüssigkristallpolymer aufweist, wobei das Zeichen unter Druckeinfluss von einem dunklen in einen transparent Zustand wechselt, oder umgekehrt. Auch WO 2005/120855 A1 beschreibt ein drucksensibles Sicherheitselement (z.B. für Geldnote) mit einer gemusterten piezochromen cholesterischen Flüssigkristallschicht.

EP 2 003 623 A1 beschreibt ein Sicherheitselement, z.B. für eine Banknote, das eine schaltbare Polymerschicht und ein darunterliegendes Echtheitsprüfungsmerkmal, z.B. in Form eines gedruckten Buchstabens oder Bildes, aufweist, wobei die Polymerschicht zwischen einem transparenten und opaken Zustand durch einen externen Stimulus schaltbar ist. Die Polymerschicht kann beispielsweise ein piezochromes cholesterisches Flüssigkristallpolymer sein, das unter Druckeinwirkung schaltet.

US 2006/126001 A1 offenbart eine Anzeige als Sicherheitselement, wobei die Anzeigeschicht einen in ein Polymermaterial eingebetteten cholesterischen Flüssigkristall aufweist und in die Anzeigeschicht ein permanentes Echtheitsmerkmal, z.B. ein Text, mittels einmaliger Belichtung mit einer hochenergetischen Lampe eingeschrieben ist. Das permanente Echtheitsmerkmal kann je nach Schaltzustand des cholesterischen Flüssigkristalls sichtbar gemacht oder verborgen werden.

JP 2003 315760 A offenbart eine Chipkarte (z.B. Kreditkarte, Ausweis etc.) mit integrierter drucksensibler Anzeige, basierend auf einem cholesterischem Flüssigkristall, der in eine Polymermatrix eingelassen ist. Die Anzeige weist Elektroden auf zur Anzeige von Information. Durch Ausüben von Druck (z.B. durch manuelles Biegen der Karte) kann der angezeigte Inhalt gelöscht werden.

EP 0 435 029 A2 beschreibt einen Datenträger mit einem Sicherheitselement, beispielsweise einem Sicherheitsfaden, aus einem cholesterischen Flüssigkristallpolymer. Eine symmetrische Variante des Sicherheitsfadens weist zwei übereinander angeordnete Flüssigkristallschichten auf.

Aufgabe der vorliegenden Erfindung ist es, ein piezochromes Sicherheitselement für Datenträger zu schaffen, welches verbesserte Eigenschaften in Bezug auf die mechanische Flexibilität und die Oberflächenstruktur zeigt.

Diese Aufgabe wird durch ein Sicherheitselement, einen Datenträger, ein Transferelement sowie ein Herstellungsverfahren mit den Merkmalen der unabhängigen Ansprüche gelöst. Die abhängigen Ansprüche betreffen bevorzugte Ausgestaltungen und Weiterbildungen der Erfindung.

Die Erfindung basiert auf der Erkenntnis, dass flüssigkristalline Schichten so ausgestaltet werden können, dass sie unter mechanischem Druck veränderliche optische Eigenschaften zeigen und somit ein piezochromes Verhalten im Sinne der vorliegenden Druckschrift aufweisen, wobei zugleich eine verbesserte mechanische Flexibilität und eine verbesserte Oberflächenstruktur erhalten werden kann, die eine Verwendung solcher flüssigkristallinen Schichten in Sicherheitselementen für Datenträger ermöglicht.

Das erfindungsgemäße Sicherheitselement umfasst daher ein piezochromes, flüssigkristallines Material, das in einer Schicht angeordnet ist. Dabei ist das piezochrome, flüssigkristalline Material selbst vorzugsweise schichtartig ausgebildet.

Das erfindungsgemäße Sicherheitselement umfasst ein piezochromes, flüssigkristallines Material eine cholesterische Phase und ein kompressibles Elastomer. Dabei kann es sich um ein Flüssigkristall-Polymer mit vernetzten Seitenketten handeln, welche elastomere Eigenschaften besitzen. Dadurch wird die cholesterische Phase durch das Elastomer derart gehalten, dass die Richtung der Schraubenachse der cholesterischen Phase, die durch die Helixstruktur der cholesterischen Phase definiert ist, in Richtung der Flächennormalen der flüssigkristallinen Schicht zeigt und die Ganghöhe der Helixstruktur der cholesterischen Phase bei Kompression des Elastomers, beispielsweise durch mechanischen Druck auf die flüssigkristalline Schicht, verändert wird. Mit anderen Worten besitzt die cholesterische Phase in einem komprimierten Zustand des Elastomers eine gegenüber dem unkomprimierten Zustand des Elastomers, der sogenannten Ruhelage, veränderte, insbesondere verringerte Ganghöhe.

Der piezochrome Effekt beruht auf der an sich bekannten Eigenschaft, dass cholesterische, flüssigkristalline Phasen Licht einer bestimmten Wellenlänge selektiv mit einer bestimmten Drehrichtung reflektieren. Die Drehrichtung und die Wellenlänge des reflektierten Lichtes hängen dabei von der Drehrichtung der cholesterischen, flüssigkristallinen Phase und deren Ganghöhe ab. Dabei gilt, dass die Wellenlänge des reflektierten Lichtes bei gegebenem Einfallswinkel proportional zur Ganghöhe der cholesterischen Phase ist. Demzufolge wird in der unkomprimierten Ruhelage des Elastomers Licht längerer Wellenlänge reflektiert und bei Kompression und damit einhergehender Verkürzung der Ganghöhe der cholesterischen Phase Licht entsprechend kürzerer Wellenlänge reflektiert.

Die elastischen Eigenschaften des kompressiblen Elastomers werden so eingestellt, dass der mechanische Druck, der durch einen Betrachter ausgeübt wird, zu einer ausreichenden Veränderung der Ganghöhe der cholesterischen Phase führt, so dass der beabsichtigte piezochrome Effekt beobachtet werden kann. Dies geschieht im Falle eines vernetzbaren, polymeren Elastomers durch eine geeignete Vernetzung mit geeigneten Rückstellkräften. Alternativ oder zusätzlich können auch elastische, kompressible Füllkörper in der flüssigkristallinen Schicht vorgesehen sein.

Zur Herstellung des erfindungsgemäßen Sicherheitselements gemäß der ersten Ausführungsform wird zunächst innerhalb der zu erzeugenden piezochromen, flüssigkristallinen Schicht eine Vorstufe des Elastomers sowie die cholesterische Phase des Flüssigkristalls bereitgestellt. Dies geschieht vorzugsweise mittels Tief-, Flexo- oder Siebdruck einer Formulierung, welche die Vorstufe des Elastomers und die cholesterische Phase des Flüssigkristalls umfasst, auf ein geeignetes Substrat. Bei dem Substrat handelt es sich vorzugsweise um einen strukturierten oder unbehandelten Polymerträger, beispielsweise eine PET-Folie, welche die gewünschte planare Orientierung der cholesterischen, flüssigkristallinen Phase schafft, durch welche die Schraubenachse der Helixstruktur der cholesterischen Phase in Richtung der Flächennormalen orientiert wird.

Anschließend wird die Ganghöhe der cholesterischen Phase auf eine vorbestimmte initiale Ganghöhe eingestellt. Verschiedene Möglichkeiten dazu werden weiter unten erläutert.

Abschließend wird unter Beibehaltung der zuvor eingestellten initialen Ganghöhe das piezochrome, flüssigkristalline Material erzeugt, indem die Elastomer-Vorstufe in das Elastomer mit den gewünschten elastischen Eigenschaften umgewandelt wird. Dadurch wird die zuvor eingestellte initiale Ganghöhe der cholesterischen Phase als Ganghöhe der cholesterischen Phase in dem unkomprimierten Elastomer, und damit in dessen Ruhelage, fixiert. Vorzugsweise wird das Elastomer durch ein vernetztes Polymer gebildet und die Elastomer-Vorstufe durch ein Monomer oder eine Prä-Polymer. Die Elastomer-Vorstufe wird dann geeignet vernetzt, um die gewünschten elastischen Eigenschaften zu erhalten. Zugleich wird dabei die Orientierung und Lage der Flüssigkristallmoleküle relativ zu dem Elastomer fixiert und damit auch die Orientierung der Schraubenachse der cholesterischen Phase innerhalb der flüssigkristallinen Schicht.

In einer bevorzugten Ausgestaltung des erfindungsgemäßen Herstellungsverfahrens zeigt die cholesterische, flüssigkristalline Phase ein thermochromes Verhalten. Dadurch kann durch Kontrolle der Temperatur während der Erzeugung des Elastomers, also beispielsweise während der Vernetzung, die initiale Ganghöhe der cholesterischen Phase eingestellt werden. Bei solchen thermochromen, cholesterischen Phasen führt eine Erhöhung der Temperatur meist zu einer Verringerung der Ganghöhe und damit zu einer in den kurzwelligen Bereich des elektromagnetischen Spektrums verschobenen Reflexion des Sicherheitselementes. Weiterhin können dabei wärmespeichernde Pigmente innerhalb der flüssigkristallinen Schicht zum Einsatz kommen, wodurch die Temperatur während der Erzeugung des Elastomers konstant gehalten werden kann. Weiterhin können der flüssigkristallinen Schicht elektromagnetische Strahlung absorbierende Stoffe, beispielsweise Laserabsorber, zugesetzt werden, um eine gezielte Erwärmung der flüssigkristallinen Schicht zu ermöglichen. Ebenso kann die Temperatur der flüssigkristallinen Schicht verringert werden, um eine vergrößerte Ganghöhe der cholesterischen Phase und damit eine in den langwelligen Bereich des elektromagnetischen Spektrums verschobene Reflexion des Sicherheitselementes zu erhalten.

Vorzugsweise weist die Schicht während der Erzeugung des Elastomers bereichsweise unterschiedliche Temperaturen auf, wodurch innerhalb der Schicht bereichsweise unterschiedliche initiale Ganghöhen erhalten werden.

Dadurch reflektiert die Schicht in verschiedenen Teilbereichen der Schicht elektromagnetische Strahlung mit verschiedenen Wellenlängen.

Im Allgemeinen umfasst eine cholesterische Phase neben beispielsweise einer nematischen Phase eine Verdrillersubstanz, die sogenannte chirale Dotierung, wobei ein direkter Zusammenhang zwischen der Wirkung der Verdrillersubstanz und der Ganghöhe der cholesterischen Phase besteht. In einer bevorzugten Ausgestaltung des Herstellungsverfahrens wird daher die initiale Ganghöhe durch Einstellen der Wirkung der Verdrillersubstanz eingestellt. Die Wirkung der Verdrillersubstanz kann beispielsweise durch deren Molekülaufbau, durch Modifizieren der Verdrillersubstanz selbst, durch Veränderung ihrer Konzentration oder durch Zugabe einer weiteren Verdrillersubstanz eingestellt werden.

In einer bevorzugten Ausgestaltung ist die Verdrillersubstanz photosensitiv. Solche Materialien, deren Chiralität oder Verdrillerwirkung sich durch Licht beispielsweise in Form von Laserstrahlung, beeinflussen lässt, werden oft als einstellbare, chirale Materialien (TCM, tunable chirale materials) bezeichnet. Die Laserstrahlung beeinflusst dabei die Verdrillersubstanz vorzugsweise dahingehend, dass deren Drehkraft durch einen Bindungsbruch, eine Rotation oder eine Umlagerung in den Molekülen der Verdrillersubstanz verändert wird. Die Wellenlänge, die Strahlungsdichte und die Pulslänge des Laserlichtes werden dabei geeignet eingestellt, um die gewünschte Wirkung der Verdrillersubstanz und somit die gewünschte Ganghöhe zu erhalten. Beispielsweise können Verdriller auf Binaphtyl-Basis verwendet werden, deren Verdrillerwirkung mit Hilfe von Licht im UV-Bereich eingestellt werden kann. Alternativ können auch Substanzen aus dem Bereich der sogenannten molekularen Schalter eingesetzt werden, welche als Verdrillersubstanzen wirken und bei Bestrahlung im kurzwelligen, sichtbaren Bereich des elektromagnetischen Spektrums geeignete Isomerisierungsreaktionen zeigen.

Eine solche Reaktion kann in einer photosensitiven Verdrillersubstanz auch durch Mehrphotonenprozesse bei Bestrahlung mit elektromagnetischer Strahlung im langwelligen, sichtbaren Bereich und im Infrarot-Bereich erhalten werden. Solche Mehrphotonenprozesse finden typischerweise erst bei einer hohen Strahlungsleistung statt, was bei Verwendung von Kurz- und Ultrakurzpulslasern, gegebenenfalls in Kombination mit einer starken Fokussierung des Laserlichts, jedoch realisiert werden kann. Bevorzugt werden dazu Laser im nahen Infrarotbereich, beispielsweise Nd:YAG-Laser, verwendet.

Auch bei Verwendung einer solchen Laserlichtquelle kann innerhalb der flüssigkristallinen Schicht eine bereichsweise unterschiedliche Einstellung der Wirkung der Verdrillersubstanz, beispielsweise durch eine geeignete Ablenkung des Laserlichts, erhalten werden. Alternativ kann eine bereichsweise unterschiedliche Bestrahlung auch mit Hilfe von Masken oder Schablonen erreicht werden, was vor allem bei Bestrahlung im UV-Bereich vorteilhaft ist.

In einer weiteren Ausgestaltung ist die Verdrillersubstanz thermolabil und kann durch geeignete Bestrahlung teilweise oder vollständig zerstört werden. Die thermische Einwirkung der Bestrahlung kann durch absorbierende Substanzen innerhalb der flüssigkristallinen Schicht weiter verstärkt werden. Eine solche starke thermische Wirkung der Bestrahlung tritt beispielsweise im Bereich eines Laserfokus auf. Führt dieser Effekt zur vollständigen Zerstörung oder Inaktivierung der Verdrillersubstanz, wodurch die Helixstruktur aufgelöst wird und keine cholesterische Phase mehr vorliegt, wird er auch "thermische Razemisierung" genannt. Diese tritt vor allem bei Biarylen, beispielsweise Binaphthyl, und Spiro-Verbindungen auf.

In einer weiteren Ausgestaltung des erfindungsgemäßen Herstellungsverfahrens, wird die Wirkung der Verdrillersubstanz durch Zugabe einer weiteren, zweiten Verdrillersubstanz verändert. Die zweite Verdrillersubstanz wird dabei vorzugsweise in abgeschlossenen Kapseln innerhalb der flüssigkristallinen Schicht bereitgestellt und das Einstellen der initialen Ganghöhe an der cholesterischen Phase geschieht durch gezieltes Zerstören zumindest eines Teils der Kapseln, was beispielsweise durch eine geeignete Bestrahlung geschehen kann. Dabei kann die zweite Verdrillersubstanz die Wirkung der ursprünglichen Verdrillersubstanz verstärken oder vermindern und somit die Ganghöhe der cholesterischen Phase jeweils verringern oder erhöhen.

Das piezochrome, flüssigkristalline Material kann in Form einer durchgängigen Schicht bereitgestellt werden. Alternativ kann das piezochrome, flüssigkristalline Material nach der Erzeugung bzw. Vernetzung des Elastomers in plättchenförmige Pigmente gebrochen werden. Eine entsprechende Vorgehensweise ist aus den Herstellungsprozessen von OVI (Flex), Metalure (E-ckart) oder STEP (LCP) bekannt. Diese können dann in ein geeignetes Bindemittel eingebracht werden, wodurch eine Druckfarbe entsteht, die anschließend auf das gewünschte Substrat aufgedruckt werden kann. Da das piezochrome, flüssigkristalline Material dabei in Form von Plättchen vorliegt, richten sich diese auf dem bedruckten Substrat, insbesondere wenn als Druckverfahren Siebdruck oder Flexodruck verwendet wird, derart aus, dass die optischen und elastischen Eigenschaften des piezochromen, flüssigkristallinen Materials erhalten bleiben. Insbesondere zeigt die Schraubenachse der Helixstruktur der cholesterischen Phase auch in Richtung der Flächennormalen der Druckschicht. Dadurch kann ein piezochromes, flüssigkristallines Material auch auf Substraten geschaffen werden, welche sich für die Erzeugung einer durchgängigen Schicht eines piezochromen, flüssigkristallinen Materials nicht eignen.

In einer besonders bevorzugten Ausgestaltung ist das piezochrome, flüssigkristalline Material im Inneren von elastischen Mikrokapseln angeordnet. Dazu werden die Vorstufe des Elastomers, die cholesterische Phase und gegebenenfalls eine Vielzahl von Kapseln mit einer weiteren, zweiten Verdrillersubstanz im Inneren dieser Mikrokapseln bereitgestellt. Die elastischen Mikrokapseln werden dann wiederum in ein geeignetes Bindemittel eingebracht, wodurch eine Druckfarbe entsteht, die auf beliebige Substrate aufgebracht werden kann. Vorzugsweise wird erst nach einem Aufdrucken dieser Druckfarbe die Ganghöhe der cholesterischen Phase im Innern der elastischen Mikrokapseln auf eine gewünschte, initiale Ganghöhe eingestellt und das Elastomer im Inneren der elastischen Mikrokapseln erzeugt, wobei das Elastomer vorzugsweise auch mit der Innenwand der elastischen Mikrokapseln vernetzt wird. Dadurch kann eine piezochrome, flüssigkristalline Schicht mit Hilfe eines gewöhnlichen Druckvorgangs erzeugt werden, deren optische und elastische Eigenschaften erst nach dem Aufdrucken eingestellt zu werden braucht. Damit können innerhalb der entstehenden Druckschicht bereichsweise verschiedene optische und/oder elastische Eigenschaften eingestellt werden.

Vorzugsweise geschieht das Erzeugen des Elastomers durch Vernetzen einer präpolymeren, beispielsweise monomere oder oligomeren Substanz mit bi- oder multifunktionellen Vernetzern zu einem Polymer-Netzwerk, wobei die Vernetzung durch geeignete Bestrahlung beispielsweise im UV-Bereich geschieht.

In einer bevorzugten Ausgestaltung des piezochromen, flüssigkristallinen Materials kehrt dieses nach Kompression des Elastomers nur zeitlich verzögert in seine unkomprimierte Ruhelage zurück. Dadurch kann das piezochrome, flüssigkristalline Material auch nach Beendigung eines mechanischen Drucks in seinen komprimierten Zustand betrachtet werden. Dies ist vorteilhaft, wenn der mechanische Druck beispielsweise durch den Finger eines Betrachters ausgeübt wird, welcher bei der Ausübung des mechanischen Drucks das Sicherheitselement verdeckt.

Vorteilhafter Weise ist das piezochrome, flüssigkristalline Material in dem erfindungsgemäßen Sicherheitselement in Betrachtungsrichtung vor einem dunklen, stark absorbierenden, insbesondere schwarzen Untergrund angeordnet. Im erfindungsgemäßen Sicherheitselemente befindet sich in Blickrichtung des Betrachters hinter der Schicht mit dem piezochromen flüssigkristallinen Material eine Information, welche bei Kompression des Elastomers verborgen und in der Ruhelage des Elastomers erkennbar ist. Zusätzlich können beispielsweise bei Kompression des Elastomers und/oder Rückkehr in die Ruhelage zusätzliche Informationen erkennbar sein. Dies wird vorzugsweise dadurch erreicht, dass die Information sich farblich von dem dunklen Hintergrund abhebt, die Farbe der Information jedoch identisch mit der Farbe ist, die das piezochrome, flüssigkristalline Material in seiner unkomprimierten Ruhelage reflektiert.

In einer weiteren Ausgestaltung weist die piezochrome, flüssigkristalline Schicht wenigstens zwei Bereiche auf, welche voneinander verschiedene elastische Eigenschaften aufweisen. Zeigen beide Bereiche in der unkomprimierten Ruhelage des Elastomers identische optische Eigenschaften, indem beide Bereiche eine identische initiale Ganghöhe der cholesterischen Phase aufweisen, so deformieren sich beide Bereiche bei Ausübung eines gleichmäßigen mechanischen Drucks auf die Schicht unterschiedlich, wodurch sich unterschiedliche Ganghöhen ergeben und somit beide Bereiche anhand ihrer unterschiedlichen Reflexionsfarben von einem Betrachter bei oder nach Ausübung eine mechanischen Drucks erkannt werden können. Vorzugsweise bilden die beiden Bereiche dabei eine Information für den Betrachter. Dieser Effekt kann noch verstärkt werden, wenn die cholesterische Phase in der unkomprimierten Ruhelage des Elastomers bereichsweise auch unterschiedliche optische Eigenschaften beispielsweise durch unterschiedliche initiale Ganghöhen der cholesterischen Phase aufweist. Vorzugsweise werden die elastischen Eigenschaften in einem Bereich derart eingestellt, dass der piezochrome Effekt dort vollständig unterdrückt wird, was beispielsweise durch eine bereichsweise geeignet geringe Kompressibilität des Elastomers erreicht werden kann.

In einem nicht erfindungsgemäßen weiteren Sicherheitselement umfasst das piezochrome, flüssigkristalline Material ein flüssigkristallines Material, welches in eine Schwammstruktur eingebettet ist. Diese ist derart ausgebildet, dass sich bei Ausübung eines mechanischen Drucks auf die piezochrome, flüssigkristalline Schicht oder durch Anwendung eines elektrischen Feldes innerhalb dieser Schicht das flüssigkristalline Material von einer ersten Orientierung in eine zweite Orientierung umlagert. Dabei unterscheiden sich die optischen Eigenschaften des piezochromen, flüssigkristallinen Materials in der ersten Orientierung des flüssigkristallinen Materials von den optischen Eigenschaften in der zweiten Orientierung des flüssigkristallinen Materials. In einer der beiden Orientierungen kann dann eine Information für einen Betrachter verborgen werden, während diese Information in der anderen Orientierung des flüssigkristallinen Materials erkennbar ist.

Durch die Ausübung des mechanischen Drucks oder des elektrischen Feldes wird in dem piezochromen, flüssigkristallinen Material vorzugsweise ein Fluss des flüssigkristallinen Materials induziert, wobei die Schwammstruktur kleine Kanäle aufweist, welche einen gerichteten Fluss entstehen lassen. Durch diesen gerichteten Fluss richtet sich die Orientierung des flüssigkristallinen Materials wegen dessen anisotroper Viskosität um. Eine solche Umlagerung findet beispielsweise in einem nematischen, flüssigkristallinen Material zwischen einer planaren und einer homeotropen Orientierung statt. Die beiden Orientierungen von solchen nematischen, flüssigkristallinen Materialien können dann beispielsweise mit Hilfe linearer Polarisationsfilter unterschieden werden.

Besonders bevorzugt weist das flüssigkristalline Material eine cholesterische Phase auf, in der eine Umlagerung zwischen einer planaren Phase und einer fokal-konischen Phase stattfindet. In der planaren Orientierung zeigt die Schraubenachse der Helixstruktur des cholesterischen, flüssigkristallinen Materials in Richtung der Flächennormalen der piezochromen, flüssigkristallinen Schicht, wodurch entsprechend der Ganghöhe der Helixstruktur Licht einer bestimmten Wellenlänge und einer bestimmten Drehrichtung reflektiert wird. Für Licht anderer Wellenlängen ist das piezochrome, flüssigkristalline Material in der planaren Orientierung dabei transparent. Dagegen streut die piezochrome, flüssigkristalline Schicht in der fokal-konischen Orientierung des flüssigkristallinen Materials Licht aller Wellenlängen, was bei zunehmender Schichtdicke der piezochromen, flüssigkristallinen Schicht zu einer Eintrübung führt. Dadurch ergeben sich im wesentlichen zwei Möglichkeiten, eine in Blickrichtung hinter der piezochromen, flüssigkristallinen Schicht angeordnete Information in einer der beiden Orientierungen des cholesterischen, flüssigkristallinen Materials sichtbar zu machen. Dies wird in den nicht erfindungsgemäßen Vergleichsbeispielen näher erläutert.

Nach Beendigung der Ausübung des mechanischen Drucks in den Ausgangszustand reversibel zurückkehren. Vorzugsweise ist das piezochrome, flüssigkristalline Material jedoch bistabil und verbleibt somit nach Beendigung der Ausübung des mechanischen Drucks oder des elektrischen Feldes in der jeweiligen planaren oder fokal-konischen Orientierung.

In einer alternativen Ausgestaltung des Sicherheitselementes gemäß des oben beschriebenen nicht erfindungsgemäßen Vergleichsbeispiels ist auf zumindest einer Seite der piezochromen, flüssigkristallinen Schicht eine Elektrode angeordnet, die die Form der Information aufweist. Auf der anderen Seite der piezochromen, flüssigkristallinen Schicht befindet sich eine Gegenelektrode, welche die gleiche Form aufweisen kann oder auch vollflächig ausgebildet sein kann. Durch Anlegen einer Spannung an die beiden Elektroden kann dann in der dazwischen liegenden piezochromen, flüssigkristallinen Schicht bereichsweise eine Umlagerung des flüssigkristallinen Materials induziert werden. Dazu ist die in Betrachtungsrichtung vor der piezochromen, flüssigkristallinen Schicht liegende Elektrode transparent ausgebildet.

In einer weiteren Ausgestaltung ist in Blickrichtung vor der flüssigkristallinen Schicht eine weitere Schicht angeordnet, die einen optisch variablen Effekt aufweist. Dadurch kann ein Sicherheitselement geschaffen werden, dass einen optisch variablen Effekt zeigt. Die optisch variable Schicht wird dabei vorzugsweise bildaufgelöst geschaffen.

Weitere Ausführungsbeispiele und Vorteile der Erfindung werden nachfolgend beispielhaft anhand der begleitenden Figuren erläutert. Die Beispiele stellen bevorzugte Ausführungsformen dar, die die Erfindung in keiner Weise beschränken. Die gezeigten Figuren sind schematische Darstellungen, die die realen Proportionen nicht widerspiegeln, sondern einer verbesserten Anschaulichkeit der verschiedenen Ausführungsbeispiele dienen.

Im Einzelnen zeigen die Figuren:
- Fig. 1: eine Banknote mit Sicherheitselement;
- Fig. 2: einen Querschnitt durch eine piezochrome, flüssigkristalline Schicht gemäß einem ersten Ausführungsbeispiel;
- Fig. 3a und 3b: verschiedene Möglichkeiten zur Einstellung der elastischen Eigenschaften;
- Fig. 4: den Aufbau und die Wirkungsweise von elastischen Mikrokapseln;
- Fig. 5: das Einbringen einer zweiten Verdrillersubstanz;
- Fig. 6: eine Schicht mit bereichsweise verschiedenen optischen und/oder elastischen Eigenschaften;
- Fig. 7: einen Querschnitt durch eine piezochrome, flüssigkristalline Schicht gemäß einem nicht erfindungsgemäßem Vergleichsbeispiel; und
- Fig. 8a und 8b: verschiedene Möglichkeiten zum Verbergen und Anzeigen einer Information.

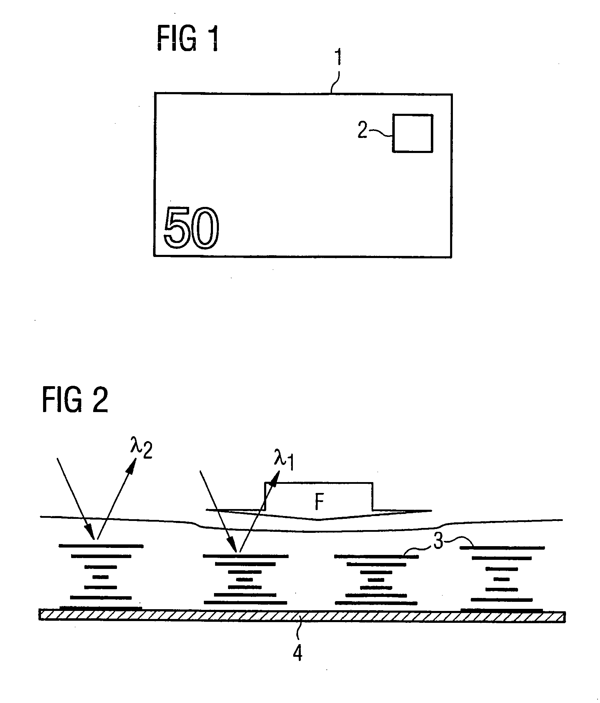

In Fig.1 ist als Datenträger eine Banknote dargestellt, welche ein Sicherheitselement 2 mit einer Schicht mit einem piezochromen, flüssigkristallinen Material umfasst.

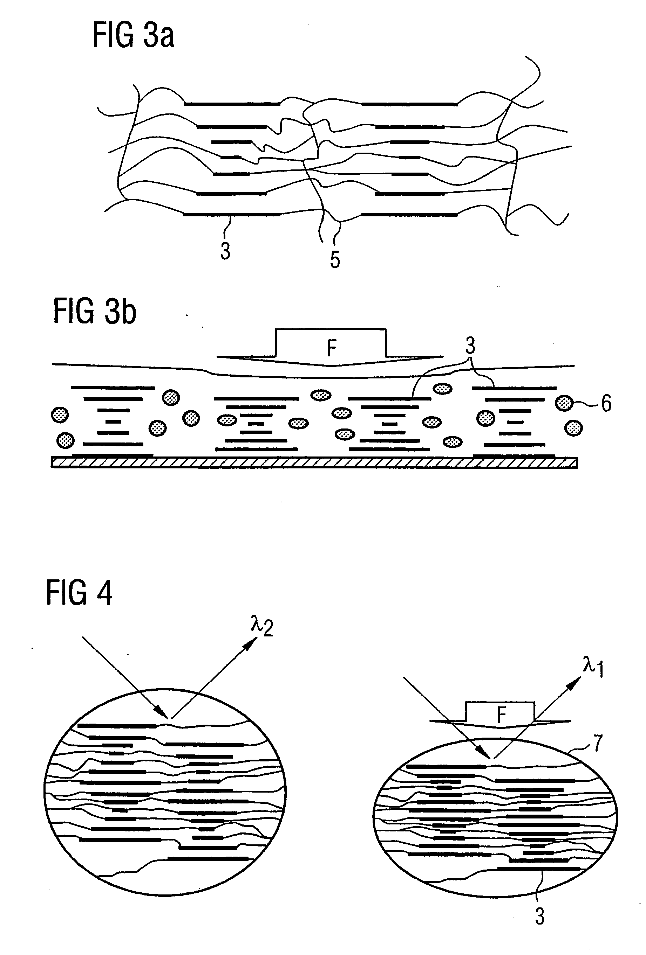

Fig. 2 zeigt einen Querschnitt durch eine Schicht mit einem piezochromen, flüssigkristallinen Material gemäß einem ersten Ausführungsbeispiel. Dieses umfasst eine cholesterische Phase 3, die vernetzt werden kann. Nach dem Aufbringen der cholesterischen Phase 3 auf das Substrat 4 ist die cholesterische Phase zunächst noch nicht vernetzt und die cholesterische Phase kann sich frei orientieren. Die gewünschte planare Orientierung der cholesterischen Phase 3, in der die Schraubenachse der Helixstruktur der cholesterischen Phase 3 in Richtung der Flächennormalen des Substrats 4 und somit auch der Flächennormalen der Schicht zeigt, wird beispielsweise durch Verwendung einer strukturierten PET-Folie als Substrat erreicht. Die orientierte cholesterische Phase 3 wird anschließend in einem Elastomer fixiert. Dazu weisen die Flüssigkristallmoleküle der cholesterischen Phase 3 in dem Ausführungsbeispiel funktionalisierte Seitenketten, beispielsweise Mono-, Bi- oder multifunktionelle Acrylate auf, die durch UV-Strahlung vernetzbar sind. Dadurch entsteht ein Seitenkettennetzwerk 5, wie dies in Fig. 3a schematisch dargestellt ist. In dem Seitenkettennetzwerk 5 ist die cholesterische Phase 3 in ihrer räumlichen Lage und Position fixiert. Das Seitenkettennetzwerk 5 wird derart vernetzt, dass es elastische Eigenschaften besitzt und kompressibel ist, so dass das piezochrome, flüssigkristalline Material das gewünschte piezochrome Verhalten mit den gewünschten elastischen Eigenschaften zeigt. Das Seitenkettennetzwerk enthält in dem dargestellten Ausführungsbeispiel auch Quervernetzungen. Besonders geeignet dafür sind längere, flexible, aliphatische oder alkoxy-Spacergruppen mit endständigen Acrylatfunktionen. Zur Steuerung der Netzpunktdichte des Seitenkettennetzwerks 5 und dessen Netzbogenlänge wird das Verhältnis zwischen einem Photoinitiator und dem Mono-, Bi- oder multifunktionellen Monomer-Acrylat(en) geeignet eingestellt. Weiterhin können dazu auch flexible, bifunktionelle Einheiten wie beispielsweise N-Butyldiacrylat eingesetzt werden. Zudem besitzen die Seitenketten des Seitenkettennetzwerks 5 nach Vernetzung eine hinreichend niedrige Glastemperatur Tg, welche unterhalb der minimalen Einsatztemperatur des Sicherheitselementes liegt, um jederzeit eine ausreichende Elastizität sicherzustellen.

Wie in Fig. 2 schematisch dargestellt, kann die piezochrome, flüssigkristalline Schicht durch mechanischen Druck komprimiert werden, was schematisch durch die Kraft F dargestellt ist. Dadurch verringert sich in einem komprimierten Bereich der piezochromen, flüssigkristallinen Schicht die Ganghöhe der cholesterischen Phase 3 und somit die Wellenlänge des reflektierten Lichtes. In der dargestellten planaren Orientierung der cholesterischen Phase 3, wirkt diese wie ein Bragg-Gitter auf einfallendes Licht und die Ganghöhe der cholesterischen Phase 3 bestimmt die Wellenlänge des reflektierten Lichtes. Daher reflektiert die cholesterische Phase 3 im unkomprimierten Zustand Licht größerer Wellenlänge (λ₂) als im komprimierten Zustand (λ₁). Bei geeigneter Vernetzung der Flüssigkristalle der cholesterischen Phase 3 mittels des Seitenkettennetzwerks 5 kann zudem eine Änderung der Ganghöhe der cholesterischen Phase 3 in Abhängigkeit der Temperatur unterdrückt werden.

In einem weiteren, nicht dargestellten Ausführungsbeispiel wird das piezochrome, flüssigkristalline Material zwischen zwei transparenten Folien, beispielsweise PET-Folien, angeordnet, beispielsweise innerhalb einer Folienverbundbanknote. Dabei kann der Abstand der Folien geeignet gewählt werden, so dass dabei beispielsweise eine im Vergleich mit üblichen Druckschichten erhöhte Materialmenge aufgebracht werden kann, was zu einer deutlichen Steigerung der Erkennbarkeit des optischen und piezochromen Effekts führt.

In Fig. 3b umfasst die piezochrome, flüssigkristalline Schicht zusätzlich elastische Füllkörper 6, wodurch die Reversibilität der elastischen Deformation und das Rückkehrverhalten der piezochromen, flüssigkristallinen Schicht nach Beendigung des mechanischen Drucks F in die elastische Ruhelage gesteuert werden kann. Beispielsweise können die elastischen Eigenschaften der piezochromen, flüssigkristallinen Schicht derart eingestellt werden, dass diese nur verzögert und langsam in die elastische Ruhelage zurückkehrt. Dadurch kann der Betrachter den Effekt der Kompression auch dann beobachten, wenn das Sicherheitsmerkmal bei Ausübung des Drucks verdeckt wird, beispielsweise durch den Finger des Betrachters. Weiterhin kann das elastische Verhalten der piezochromen, flüssigkristallinen Schicht so eingestellt werden, dass der Benutzer nach Beendigung des mechanischen Drucks einen dynamischen Eindruck erhält.

Die elastischen Füllkörper können Voll- oder Hohlkörper sein. Als Material für solche elastische Füllkörper eignen sich beispielsweise Latex, Natur- oder Synthesekautschuk. Die elastischen Füllkörper können aber auch durch definierte Lufteinschlüsse gebildet werden, welche durch Eindringen von Latexpartikeln geschaffen werden, welche nach der Vernetzung des Elastomers durch ein geeignetes Lösungsmittel herausgelöst werden. Die Füllkörper können zudem noch Merkmalsstoffe, UV-Absorber, eine Laserveränderbarkeit oder sonstige Eigenschaften besitzen, mit deren Hilfe die elastischen Eigenschaften gesteuert werden können.

Weiterhin kann die elastische Eigenschaft der piezochromen, flüssigkristallinen Schicht auch durch eine Bindungsspaltung in dem Seitenkettennetzwerk 5 verändert werden. Dazu können Strahlungsquellen im UV-Bereich oder auch Kurz- oder Ultrakurzpulslaser im sichtbaren oder infraroten Bereich verwendet werden.

In dem in Fig. 2 dargestellten Ausführungsbeispiel ist das piezochrome, flüssigkristalline Material als vollflächige, durchgehende Schicht auf ein Substrat aufgebracht.

In einer nicht dargestellten Variante wird eine solche Schicht nach der Vernetzung des Elastomers gebrochen, wodurch plättchenförmig Pigmente entstehen, die anschließend zur Schaffung einer Druckfarbe in ein geeignetes Bindemittel eingebracht werden, welches beispielsweise selbst elastisch und kompressibel ist. Diese Druckfarbe mit den plättchenförmigen Pigmenten wird dann durch einen herkömmlichen Druckvorgang auf ein gewünschtes Substrat aufgebracht, wobei sich die plättchenförmigen Pigmente dabei entsprechend ihrer Form auf dem Substrat so ausrichten, dass die Schraubenachse der Helixstruktur der cholesterischen Phase 3 in Richtung der Flächennormalen des Substrats zeigt. Dadurch zeigt auch die aufgebrachte Druckfarbe das gewünschte piezochrome Verhalten. Weiterhin kann die Druckfarbe, ähnlich wie oben bereits beschrieben, auch elastische Füllkörper enthalten, die die Rückkehr in den Ausgangszustand nach Einwirkung von mechanischem Druck unterstützen.

Eine weitere Möglichkeit zur Realisierung einer piezochromen, flüssigkristallinen Druckfarbe ist die Einbringung der vernetzbaren, cholesterischen Phase 3 in elastische Mikrokapseln 7, wie dies in Fig. 4 schematisch dargestellt ist. Zur räumlichen Fixierung der cholesterischen Phase 3 und auch zur Kompensation der Temperaturabhängigkeit der Ganghöhe werden die Flüssigkristallmoleküle der cholesterischen Phase mit der Innenwand der elastischen Mikrokapseln 7 und auch untereinander vernetzt. Dies wird durch eine geeignete Endfunktionalisierung der Flüssigkristallmoleküle, beispielsweise durch Acrylate, und durch die Funktionalität des Materials der elastischen Mikrokapseln beispielsweise durch frei funktionelle Acrylgruppen wie z.B bei acrylierter Gelatine erreicht. Die Vernetzung kann dabei auch eine Quervernetzung, wie sie in Fig. 3a dargestellt ist, enthalten. Der Einsatz solcher elastischer Mikrokapseln ermöglicht es den Vernetzungsgrad in geeigneter Weise zu steuern, um die gewünschten elastischen Eigenschaften zu erzielen. Neben den bereits beschriebenen Möglichkeiten, die elastischen Eigenschaften des piezochromen, flüssigkristallinen Materials einzustellen, bietet der Einsatz von Mikrokapseln noch die weiteren Möglichkeiten der Verwendung von Kapselmaterial mit geeigneten elastischen Eigenschaften und der Einbettung des vernetzten flüssigkristallinen Materials in ein mechanisch deformierbares Gel. Bei der letztgenannten Möglichkeit wird die gewünschte Kompressibilität durch die Verwendung eines Gels erreicht. Dazu wird der cholesterische Flüssigkristall mit einem geeigneten Lösungsmittel-Sol-Gemisch verkapselt und anschließend durch UV-Bestrahlung in ein Gel überführt.

Neben der Einstellung der gewünschten elastischen Eigenschaften können auch die gewünschten optischen Eigenschaften durch Einstellen einer initialen Ganghöhe vor der Vernetzung des flüssigkristallinen Materials eingestellt werden. Hierzu können beispielsweise vorhandene thermochrome Eigenschaften der cholesterischen Phase genutzt werden. Dazu wird die Temperatur während der Vernetzung geeignet eingestellt, um die gewünschte initiale Ganghöhe der cholesterischen Phase in dem vernetzten piezochromen, flüssigkristallinen Material einzustellen. Weiterhin kann die Wirkung einer Verdrillersubstanz oder dessen Konzentration gezielt eingestellt werden. Dazu wird dem cholesterischen Flüssigkristall, welcher einen nematischen Flüssigkristall und eine Verdrillersubstanz umfasst, eine weitere, die Ganghöhe beeinflussende chirale Substanz in verkapselter Form beigemischt. Diese zweite Verdrillersubstanz ist in Mikro- oder Nanokapseln verkapselt, wobei diese Kapseln derart modifiziert sind, dass sie durch Bestrahlung gezielt zerstört werden können. Dies geschieht im vorliegenden Ausführungsbeispiel durch Laserstrahlung, welche im UV-Bereich, im sichtbaren Bereich, im Infrarot-Bereich bei beispielsweise 1.064 nm oder auch im langwelligen Infrarot-Bereich beispielsweise bei 10,6 µm liegt. Dies wird durch den Einbau von geeignet absorbierenden organischen und anorganischen Stoffen in die Hülle der Mikro- oder Nanokapseln erreicht. Dafür eignen sich besonders kolloidale oder nanoskalige Silber- oder Goldpartikel. Die Kapseln können aus einer oder mehreren Schichten aufgebaut sein. In einer nicht dargestellten Variante werden Laser-aktivierbare Treibmittel eingesetzt, welche beim Erhitzen mittels Laserstrahlung ein Gas freisetzen, welches durch die resultierende Volumenvergrößerung die Kapseln zerstört. Die nach der Zerstörung der Kapsel austretende zweite Verdrillersubstanz kann die Wirkung der ursprünglichen Verdrillersubstanz des cholesterischen Flüssigkristalls dann verstärken oder vermindern.

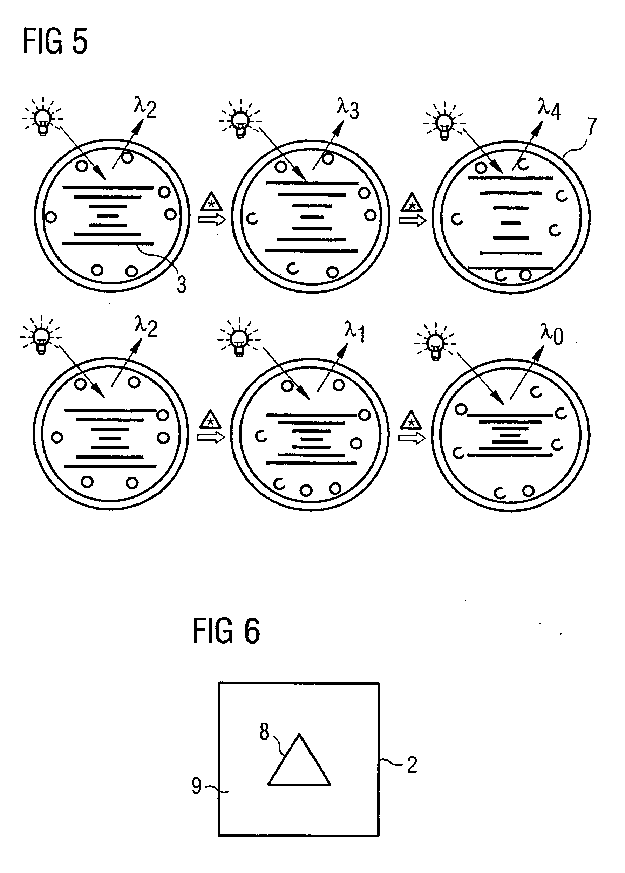

In Fig. 5 ist ein Ausführungsbeispiel dargestellt, in dem der cholesterische Flüssigkristall in Mikrokapseln 7 angeordnet ist. Innerhalb der Mikrokapseln befinden sich neben dem vernetzbaren cholesterischen Flüssigkristall 3 eine Vielzahl von kleineren Mikro- oder Nanokapseln, welche die zweite Verdrillersubstanz enthalten. In der oberen Reihe in Fig. 5 wird durch gezielte Zerstörung der Mikro- oder Nanokapseln mit Hilfe von Laserbestrahlung die zweite Verdrillersubstanz freigesetzt, welche die Wirkung der ursprünglichen Verdrillersubstanz vermindert und somit zu einer Vergrößerung der Ganghöhe der cholesterischen Phase 3 führt. Die Wellenlänge des reflektierten Lichtes wird dadurch in den langwelligeren Spektralbereich (λ₃) verschoben. Je länger und intensiver die Bestrahlung durchgeführt wird, mit der die Mikro- oder Nanokapseln zerstört werden, desto größer ist die Anzahl der zerstörten kleineren Mikro- oder Nanokapseln und somit die Menge der austretenden zweiten Verdrillersubstanz, und desto stärker ändert sich die Ganghöhe des cholesterischen Flüssigkristalls und damit die Wellenlänge des reflektierten Lichts (λ₄). In der unteren Reihe in Fig. 5 ist der umgekehrte Fall dargestellt, in dem die zweite Verdrillersubstanz die Wirkung der ursprünglichen Verdrillersubstanz verstärkt und somit zu einer geringeren Ganghöhe der cholesterischen Phase 3 und zu einer in den kurzwelligeren Wellenlängenbereich verschobenen Farbe des reflektierten Lichts (λ₁, λ₀) führt.

Pro zerstörter Mikro- oder Nanokapsel tritt eine definierte Menge der verkapselten zweiten Verdrillersubstanz aus, so dass sich die Wirkung auf die reflektierte Farbe stufenweise erhöht. Über die Anzahl und Größe der Mikro- oder Nanokapseln wird der einstellbare Farbbereich und die Abstufung festgelegt.

Die in den Mikro- oder Nanokapseln verkapselte Substanz kann zudem polymerisierbare Bestandteile und Photoinitiatoren enthalten, so dass dadurch ein weiterer Freiheitsgrad zur Einstellung der elastischen Eigenschaften gewonnen wird.

Die kleineren Mikro- oder Nanokapseln können auch mit einer Substanz gefüllt sein, die die chirale Ordnung des Flüssigkristalls vollständig zerstört, so dass keine selektive Reflexion von Licht mehr auftritt.

Die verschiedenen Möglichkeiten zur Einstellung der elastischen und optischen Eigenschaften der piezochromen, flüssigkristallinen Schicht eignen sich insbesondere zur Erzeugung verschiedener Bereiche 8, 9 innerhalb der Schicht, welche voneinander verschiedene elastische und/ oder optische Eigenschaften aufweisen, wie dies in Fig. 6 schematisch dargestellt ist. Solche Bereiche können durch die Verwendung von Schablonen bei der Belichtung oder durch gezielte Ablenkung der Bestrahlung, beispielsweise durch einen Laser, erzeugt werden. Dadurch wird die piezochrome, flüssigkristalline Schicht individualisiert. Beispielsweise können die verschiedenen Bereiche 8, 9 innerhalb der piezochromen, flüssigkristallinen Schicht in Form einer Information für den Betrachter ausgebildet werden. Zur Verbesserung der Sichtbarkeit der optischen Effekte der verschiedenen Bereiche wird die piezochrome, flüssigkristalline Schicht mit einer stark absorbierenden, dunklen Schicht hinterlegt. Dies bewirkt, dass Licht, welches nicht an dem Flüssigkristall reflektiert wurde, vom Substrat absorbiert wird und damit den optischen Eindruck nicht stört.

In einem weiteren, nicht dargestellten nicht erfindungsgemäßen Vergleichsbeispiel, ist der Hintergrund der piezochromen, flüssigkristallinen Schicht nicht durchgängig dunkel oder schwarz, sondern weist eine farbige Information für den Betrachter auf. Die Farbe dieser Information entspricht dabei der Farbe, die von der in Betrachtungsrichtung davor liegenden piezochromen, flüssigkristallinen Schicht vollflächig reflektiert wird. Daher nimmt ein Betrachter in der unkomprimierten Ruhelage der piezochromen, flüssigkristallinen Schicht nur die reflektierte Farbe wahr, welche die gleichfarbige Hintergrundinformation verdeckt. Erst bei Veränderung der reflektierten Farbe beispielsweise durch mechanischen Druck auf die piezochrome, flüssigkristalline Schicht wird die dahinter liegende Information erkennbar.

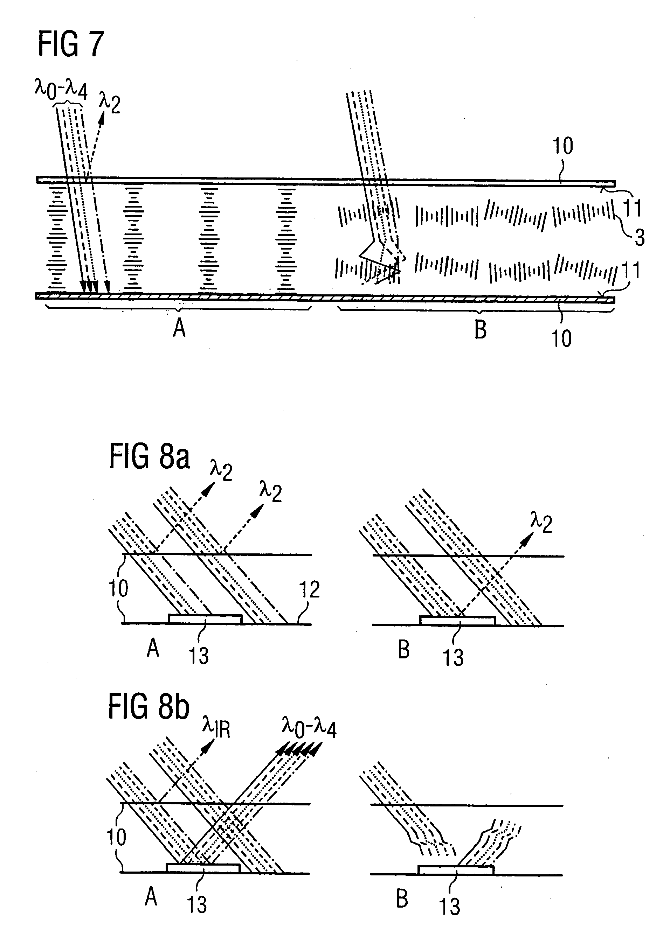

In Fig. 7 ist ein nicht erfindungsgemäßes Vergleichsbeispiel einer Schicht mit einem piezochromen, flüssigkristallinen Material dargestellt. Das piezochrome, flüssigkristalline Material ist zwischen zwei transparenten PET-Folien 10 als Substrat angeordnet. Es kann zwar auch jedes andere geeignete transparente oder nicht transparente Substrat verwendet werden, die vorliegende Verwendung von zwei PET-Folien 10 kann jedoch beispielsweise in Folienverbundbanknoten verwendet werden.

Die piezochrome, flüssigkristalline Schicht umfasst ein cholesterisches, flüssigkristallines Material 3 sowie eine nicht dargestellte ortsfeste Schwammstruktur. Eine solche piezochrome, flüssigkristalline Schicht wird aus einem nicht-polymerisierbaren, cholesterischen, flüssigkristallinen Material (ca. 75%) und Monomeren und einem geeigneten Photoinitiator (zusammen ca. 25%) hergestellt und durch UV-Bestrahlung polymerisiert. Dabei entsteht eine polymere Schwammstruktur, die Flusskanäle aufweist, in der das cholesterische, flüssigkristalline Material fließen kann. Das cholesterische, flüssigkristalline Material nimmt in dem Sicherheitselement eine planare Orientierung A oder eine fokal-konische Orientierung B an. In der planaren Orientierung A zeigt die Schraubenachse der Helix der cholesterischen, flüssigkristallinen Phase in Richtung der Flächennormalen der PET-Folien 10 wodurch entsprechend der Ganghöhe der cholesterischen, flüssigkristallinen Phase 3 Licht einer bestimmten Drehrichtung und Wellenlänge λ₂ selektiv reflektiert wird, wie dies in der Fig. 7 schematisch dargestellt ist. Licht anderer Wellenlänge tritt durch das cholesterische, flüssigkristalline Material 3 hindurch und wird von einer dahinterliegenden, nicht dargestellten schwarzen Farbschicht absorbiert. In der fokal-konischen Orientierung B tendieren die flüssigkristallinen Moleküle sich rechtwinklig zum Substrat auszurichten, wobei allerdings die cholesterische Ordnung im flüssigkristallinen Material weiterhin besteht, was diese Orientierung von der homeotropen Orientierung nematischer Kristalle unterscheidet. In der fokal-konischen Orientierung B streut die cholesterische, flüssigkristalline Phase sichtbares und infrarotes Licht. Eine selektive Reflexion tritt nicht auf und die Schicht wirkt in Abhängigkeit der Schichtdicke und der Abstimmung des Brechungsindex des flüssigkristallinen Materials mit der Schwammstruktur transparent bis trüb. Die Umlagerung von der planaren Orientierung A in die fokal-konische Orientierung B und zurück erfolgt durch mechanischen Druck und/oder ein geeignetes elektrisches Feld. Dazu weisen die PET-Folien 10 zusätzlich geeignete, transparente Elektroden 11 auf. Diese können durch ein elektrisch leitfähiges Polymer gebildet werden. Im Falle einer Umlagerung zwischen den verschiedenen Orientierungen in Folge eines mechanischen Drucks weisen die PET-Folien 10 eine ausreichende mechanische Flexibilität auf. Durch mechanischen Druck auf die PET-Folien 10 entsteht in der piezochromen, flüssigkristallinen Schicht ein viskoser Fluss innerhalb von Kanälen der Schwammstruktur, infolgedessen sich die cholesterische, flüssigkristalline Phase aufgrund ihrer anisotropen Viskosität in der planaren Orientierung A anordnet. Die Schwammstruktur ist dabei elastisch. Die Umlagerung von der planaren Orientierung A in die fokal-konische Orientierung B wird durch ein geeignetes elektrisches Feld realisiert, welches durch einen kleinen Spannungspuls an die Elektroden 11 erzeugt wird.

Alternativ zu der Ausübung eines mechanischen Drucks kann die Umlagerung von der fokal-konischen Orientierung B in die planare Orientierung A ebenfalls durch ein kurzzeitiges elektrisches Feld realisiert werden, welches durch einen vergleichsweise größeren Spannungspuls erzeugt wird. Dies führt innerhalb der flüssigkristallinen Schicht während der Anwendung des starken elektrischen Feldes zu einer Zerstörung der cholesterischen Ordnung und zu einer homeotropen Phase, welche nach Abschalten des elektrischen Feldes in die planare Orientierung A relaxiert.

Das Sicherheitselement ist in dem vorliegenden nicht erfindungsgemäßen Vergleichsbeispiel bistabil. Mit anderen Worten bleibt sowohl die planare Orientierung A als auch die fokal-konische Orientierung B nach Beendigung der Anwendung eines mechanischen Drucks oder eines elektrischen Feldes erhalten. Der mechanische Druck und das elektrische Feld dienen lediglich dazu, eine Umlagerung der Orientierungen auszulösen.

In den Figuren 8a und 8b sind zwei nicht erfindungsgemäße Vergleichsbeispiele von Sicherheitselementen gezeigt, in denen die Umlagerung zwischen der planaren Orientierung A und der fokal-konischen Orientierung B dazu verwendet wird, eine in Blickrichtung des Betrachters dahinter liegende Information 13 selektiv zu verbergen oder erkennbar zu machen. In Fig. 8a ist das Sicherheitselement mit einer schwarzen Farbe hinterlegt. Auf dem schwarzen Hintergrund ist eine einfarbige (λ₂) Information 13 in Form eines graphischen Elementes oder eines alphanumerischen Zeichens aufgebracht. Die Farbe dieser Information 13 ist mit der Reflexionsfarbe des cholesterischen, flüssigkristallinen Materials in der planaren Orientierung identisch. Für den Betrachter überlagert sich dann das durch die cholesterische, flüssigkristalline Schicht reflektierte Licht mit dem vom Untergrund stammenden Licht, so dass das Sicherheitselement vollflächig in der reflektierten Farbe erscheint und die auf dem Untergrund aufgedruckte Information 13 dadurch verborgen wird.

Weiterhin ist das in Fig. 8a dargestellte nicht erfindungsgemäße Vergleichsbeispiel so ausgestaltet, dass es in der fokal-konischen Orientierung B keine oder eine nur geringe Trübung zeigt und somit im Wesentlichen transparent ist. Dadurch kann in der fokal-konischen Orientierung B die auf dem Hintergrund aufgedruckte Information durch einen Betrachter erkannt werden. In diesem nicht erfindungsgemäßen Vergleichsbeispiel ist es vorteilhaft, wenn sich die Ganghöhe des cholesterischen, flüssigkristallinen Materials in der planaren Orientierung A nicht ändert und das cholesterische, flüssigkristalline Material beispielsweise keine oder eine nur geringe Thermochromie zeigt, da das Verbergen der auf dem Hintergrund aufgedruckten Information 13 auf der Identität der Farbe des reflektierten Lichts und der aufgedruckten Information 13 beruht.

In dem in Fig. 8b dargestellten nicht erfindungsgemäßen Vergleichsbeispiel reflektiert die cholesterische, flüssigkristalline Phase 3 in der planaren Orientierung A Licht außerhalb des sichtbaren elektromagnetischen Spektrums, beispielsweise Licht im infraroten Bereich. Dadurch erscheint das Sicherheitselement transparent und die Information 13 kann erkannt werden. Dabei kann die Information mehrfarbig (λ₀ - λ₅) sein. Weiterhin ist das Sicherheitselement derart ausgestaltet, dass sich in der fokal-konischen Orientierung des cholesterischen, flüssigkristallinen Materials 3 eine starke Trübung ergibt, die die dahinter liegende Information 13 verdeckt. Dies kann durch eine gezielte Fehlanpassung der Brechungsindizes der cholesterischen, flüssigkristallinen Phase 3 und der polymeren Schwammstruktur, wie auch durch eine entsprechend hohe Schichtdicke der flüssigkristallinen Schicht erreicht werden. Dadurch kann ein sogenannter Shutter-Effekt zwischen den beiden Orientierungen der flüssigkristallinen Phase 3 erhalten werden.

In einem weiteren, nicht dargestellten und nicht erfindungsgemäßen Vergleichsbeispiel ist auf zumindest einer der PET-Folien 10 eine transparente Elektrode in Form der Information für den Betrachter aufgedruckt. Durch Anlegen geeigneter Spannungspulse kann dann im Einflussbereich dieser Elektrode das cholesterische, flüssigkristalline Material zwischen der planaren und der fokal-konischen Orientierung umgelagert werden. Dadurch kann die verborgene Information, die durch die Form der Elektrode geschaffen wird, erkennbar gemacht werden. Die Spannung wird dabei entweder durch eine interne Spannungsversorgung oder extern beispielsweise über die Einkopplung der Spannung über eine gedruckte RFID-Antenne bereitgestellt.

## Patentansprüche

1. Sicherheitselement (2) für Datenträger (1) umfassend ein in einer Schicht angeordnetes piezochromes, flüssigkristallines Material, wobei das piezochrome, flüssigkristalline Material eine cholesterische Phase und ein Elastomer umfasst die Schraubenachse der cholesterischen Phase (3) in Richtung der Flächennormalen der Schicht zeigt und die cholesterische Phase (3) durch das Elastomer derart gehalten wird, dass die Richtung der Schraubenachse fixiert ist und bei Kompression des Elastomers in Richtung der Flächennormalen die Ganghöhe der cholesterischen Phase (3) verändert wird, wobei auf einer Seite der Schicht eine Information (13) angeordnet ist, die bei Kompression des Elastomers verborgen und in der Ruhelage des Elastomers erkennbar ist, wenn die Information (13) durch die Schicht hindurch betrachtet wird.

2. Sicherheitselement (2), nach Anspruch 1, wobei das Elastomer derart ausgestaltet ist, dass es in die unkomprimierte Ruhelage verzögert zurückkehrt.

3. Sicherheitselement (2) nach Anspruch 1 oder 2, wobei die Schicht elastische Mikrokapseln (7) umfasst und das piezochrome, flüssigkristalline Material im Inneren der Mikrokapseln (7) angeordnet ist.

4. Sicherheitselement (2) nach einem der Ansprüche 1 bis 3, wobei das piezochrome, flüssigkristalline Material innerhalb der Schicht zumindest zwei Bereich (8,9) aufweist, welche voneinander verschiedene elastische Eigenschaften des Elastomers aufweisen und/ oder in der Ruhelage des Elastomers voneinander verschiedene optische Eigenschaften der cholesterischen Phase (3) aufweisen, wobei vorzugsweise die Form der zwei Bereiche (8,9) eine Information darstellt.

5. Sicherheitselement (2) nach einem der Ansprüche 1 bis 4, wobei in Betrachtungsrichtung vor der Schicht eine optisch variable Schicht angeordnet ist.

6. Verfahren zur Herstellung eines Sicherheitselements (2) nach einem der Ansprüche 1 bis 5, aufweisend die Schritte:
- Bereitstellen einer Vorstufe des Elastomers innerhalb der Schicht,
- Bereitstellen der cholesterischen Phase (3) innerhalb der Schicht,
- Einstellen der Ganghöhe der cholesterischen Phase (3) auf eine vorbestimmte initiale Ganghöhe, und
- Erzeugen des piezochromen, flüssigkristallinen Materials durch Umwandlung der Vorstufe in das Elastomer, wobei die initiale Ganghöhe der cholesterischen Phase (3) fixiert wird.

7. Verfahren nach Anspruch 6, wobei die cholesterische Phase (3) thermochrom ist und die initiale Ganghöhe durch Einstellen der Temperatur der cholesterischen Phase (3) eingestellt wird.

8. Verfahren nach Anspruch 6 oder 7, wobei die Ganghöhe der cholesterischen Phase (3) durch eine Wirkung zumindest einer Verdrillersubstanz beeinflusst wird und die initiale Ganghöhe durch Einstellen der Wirkung der zumindest einen Verdrillersubstanz eingestellt wird.

9. Verfahren nach Anspruch 8, wobei die Verdrillersubstanz photosensitiv ist, die Wirkung der Verdrillersubstanz durch Bestrahlung veränderbar ist und die initiale Ganghöhe durch Bestrahlen der Verdrillersubstanz eingestellt wird, vorzugsweise durch Bestrahlen mit elektromagnetischer Strahlung im infraroten Spektralbereich.

10. Verfahren nach Anspruch 8 oder 9, wobei die Verdrillersubstanz thermolabil ist, die Wirkung der Verdrillersubstanz durch thermische Einwirkung verringerbar ist und die initiale Ganghöhe durch thermische Einwirkung eingestellt wird.

11. Verfahren nach einem der Ansprüche 8 bis 10, wobei in der cholesterischen Phase (3) eine zweite Verdrillersubstanz in abgeschlossenen Kapseln bereit gestellt wird und das Einstellen der initialen Ganghöhe durch gezieltes Zerstören zumindest eines Teils der Kapseln geschieht, wobei vorzugsweise die Vorstufe des Elastomers, die cholesterische Phase (3) und eine Vielzahl von Kapseln mit der zweiten Verdrillersubstanz im Innern von elastischen Mikrokapseln (7) bereitgestellt werden.

12. Verfahren nach einem der Ansprüche 6 bis 11, wobei das Einstellen der Ganghöhe und/oder das Umwandeln der Vorstufe in das Elastomer innerhalb der Schicht derart bereichsweise unterschiedlich durchgeführt wird, dass in der Schicht zumindest zwei Bereiche (8,9) mit voneinander verschiedenen initialen Ganghöhen und/oder elastischen Eigenschaften gebildet werden.

13. Datenträger (1) umfassend ein Sicherheitselement (2) nach einem der Ansprüche 1 bis 5, wobei der Datenträger (1) vorzugsweise ein Wertgegenstand, ein Sicherheitspapier, ein Sicherheitsdokument oder eine Produktverpackung ist.

14. Transferelement umfassend ein Sicherheitselement (2) nach einem der Ansprüche 1 bis 5, welches vorzugsweise ablösbar auf einer Trägerschicht aufgebracht ist.

## Claims

1. A security element (2) for data carriers (1) comprising a piezochromic, liquid-crystalline material arranged in a layer, wherein the piezochromic, liquid-crystalline material comprises a cholesteric phase and an elastomer, the screw axis of the cholesteric phase (3) points in the direction of the surface normal of the layer, and the cholesteric phase is so held by the elastomer that the direction of the screw axis is fixed and the pitch of the cholesteric phase (3) is changed upon compression of the elastomer in the direction of the surface normal, wherein on one side of the layer there is arranged information (13) that is hidden upon compression of the elastomer and is recognizable in the rest position of the elastomer, when the information (13) is viewed through the layer.

2. The security element (2) according to claim 1, wherein the elastomer is so configured that it returns to the uncompressed rest position with delay.

3. The security element (2) according to claim 1 or 2, wherein the layer comprises elastic micro capsules (7) and the piezochromic, liquid-crystalline material is arranged in the interior of the micro capsules (7).

4. The security element (2) according to any of the claims 1 to 3, wherein the piezochromic, liquid-crystalline material within the layer has at least two regions (8, 9) having mutually different elastic properties of the elastomer and/or having mutually different optical properties of the cholesteric phase (3) in the rest position of the elastomer, wherein preferably the shape of the two regions (8, 9) represents an information item.

5. The security element (2) according to any of the claims 1 to 4, wherein an optically variable layer is arranged in front of the layer in the viewing direction.

6. A method for producing a security element (2) according to any of the claims 1 to 5, comprising the steps of:
- making available a precursor of the elastomer within the layer,
- making available the cholesteric phase (3) within the layer,
- adjusting the pitch of the cholesteric phase (3) to a predetermined initial pitch, and
- producing the piezochromic, liquid-crystalline material by converting the precursor into the elastomer, wherein the initial pitch of the cholesteric phase (3) is fixed.

7. The method according to claim 6, wherein the cholesteric phase (3) is thermochromic and the initial pitch is adjusted by adjusting the temperature of the cholesteric phase (3).

8. The method according to claim 6 or 7, wherein the pitch of the cholesteric phase (3) is influenced by an effect of at least one twister substance, and the initial pitch is adjusted by adjusting the effect of the at least one twister substance.

9. The method according to claim 8, wherein the twister substance is photosensitive, the effect of the twister substance is changeable by irradiation and the initial pitch is adjusted by irradiating the twister substance, preferably by irradiating with electromagnetic radiation in the infrared spectral range.

10. The method according to claim 8 or 9, wherein the twister substance is thermolabile, the effect of the twister substance can be reduced by thermal action and the initial pitch is adjusted by thermal action.

11. The method according to any of the claims 8 to 10, wherein in the cholesteric phase (3) a second twister substance is made available in closed capsules, and the adjustment of the initial pitch takes place by targeted destruction of at least a part of the capsules, wherein preferably the precursor of the elastomer, the cholesteric phase (3) and a multiplicity of capsules are made available with the second twister substance in the interior of elastic micro capsules (7).

12. The method according to any of the claims 6 to 11, wherein the adjustment of the pitch and/or the conversion of the precursor into the elastomer within the layer is carried out differently from region to region in such a fashion that in the layer at least two regions (8, 9) are formed with mutually different initial pitches and/or elastic properties.

13. A data carrier (1), comprising a security element (2) according to any of the claims 1 to 5, wherein the data carrier (1) is preferably an object of value, a security paper, a security document or a product package.

14. A transfer element comprising a security element (2) according to any of the claims 1 to 5 that is preferably applied detachably on a carrier layer.

## Revendications

1. Elément de sécurité (2) pour supports de données (1), comprenant un matériau cristaux liquides piézochromique agencé dans une couche, le matériau cristaux liquides piézochromique comportant une phase cholestérique et un élastomère, l'axe de l'hélice de la phase cholestérique (3) étant orienté dans la direction de la normale à la surface de la couche et la phase cholestérique (3) étant maintenue de telle manière par l'élastomère que la direction de l'axe de l'hélice est fixée et que, lors d'une compression de l'élastomère dans la direction de la normale à la surface, le pas de la phase cholestérique (3) est modifié, une information (13) étant agencée d'un côté de la couche, ladite information étant cachée lors d'une compression de l'élastomère et reconnaissable dans la position de repos de l'élastomère, quand l'information (13) est observée à travers la couche.

2. Elément de sécurité (2) selon la revendication 1, l'élastomère étant réalisé de telle manière qu'il revient de manière différée dans la position de repos non comprimée.

3. Elément de sécurité (2) selon la revendication 1 ou 2, la couche comportant des microcapsules (7) élastiques et le matériau cristaux liquides piézochromique étant agencé à l'intérieur des microcapsules (7).

4. Elément de sécurité (2) selon une des revendications de 1 à 3, le matériau cristaux liquides piézochromique présentant dans la couche au moins deux zones (8, 9) qui présentent des propriétés élastiques de l'élastomère différentes les unes des autres et/ou présentent dans la position de repos de l'élastomère des propriétés optiques de la phase cholestérique (3) différentes les unes des autres, de préférence la forme des deux zones (8, 9) représentant une information.

5. Elément de sécurité (2) selon une des revendications de 1 à 4, une couche optiquement variable étant agencée avant la couche dans la direction d'observation.

6. Procédé de fabrication d'un élément de sécurité (2) selon une des revendications de 1 à 5, comprenant les étapes:
∘mise à disposition d'un précurseur de l'élastomère dans la couche,
∘ mise à disposition de la phase cholestérique (3) dans la couche,
∘ réglage du pas de la phase cholestérique (3) sur un pas initial prédéterminé, et
∘ génération du matériau cristaux liquides piézochromique par conversion du précurseur en l'élastomère, le pas initial de la phase cholestérique (3) étant fixé.

7. Procédé selon la revendication 6, la phase cholestérique (3) étant thermochromique et le pas initial étant réglé par réglage de la température de la phase cholestérique (3).

8. Procédé selon la revendication 6 ou 7, le pas de la phase cholestérique (3) étant influencé par un effet d'au moins une substance torsadante et le pas initial étant réglé par réglage de l'effet de la au moins une substance torsadante.

9. Procédé selon la revendication 8, la substance torsadante étant photosensible, l'effet de la substance torsadante étant modifiable par irradiation et le pas initial étant réglé par irradiation de la substance torsadante, de préférence par irradiation par rayonnement électromagnétique dans le domaine infrarouge.

10. Procédé selon la revendication 8 ou 9, la substance torsadante étant thermolabile, l'effet de la substance torsadante étant amoindrissable par action thermique et le pas initial étant réglé par action thermique.

11. Procédé selon une des revendications de 8 à 10, une deuxième substance torsadante étant, dans la phase cholestérique (3), mise à disposition dans des capsules fermées, et le réglage du pas initial ayant lieu par destruction ciblée d'au moins une partie des capsules, de préférence le précurseur de l'élastomère, la phase cholestérique (3) et une pluralité de capsules étant mis à disposition avec la deuxième substance torsadante à l'intérieur de microcapsules (7) élastiques.

12. Procédé selon une des revendications de 6 à 11, le réglage du pas initial et/ou la conversion du précurseur en l'élastomère dans la couche étant effectué différemment par zones de telle manière que, dans la couche, au moins deux (8, 9) zones ayant des pas initiaux et/ou propriété élastiques différents les unes des autres sont constituées.

13. Support de données (1) comprenant un élément de sécurité (2) selon une des revendications de 1 à 5, le support de données (1) étant de préférence un objet de valeur, un papier de sécurité, un document de sécurité ou un emballage de produit.

14. Elément de transfert comprenant un élément de sécurité (2) selon une des revendications de 1 à 5, qui est appliqué sur une couche support de préférence de façon détachable.
